# EUROPEAN PATENT APPLICATION

(11) **EP 4 198 579 A1**
(43) Date of publication of application: **21.06.2023**
(21) Application number: 21855843.5
(22) Date of filing: 12.07.2021
(51) Int. Cl.: G01W 1/00, G06T 7/12, G06T 7/136

(54) **CLOUD OBSERVATION SYSTEM, CLOUD OBSERVATION METHOD, AND PROGRAM**

(30) Priority: 12.08.2020 JP 2020136362
(71) Applicant: FURUNO ELECTRIC CO., LTD., Nishinomiya-City, Hyogo 662-8580 (JP)
(72) Inventor: TAKASHIMA, Yuya, Nishinomiya-City, Hyogo 662-8580 (JP)
(74) Representative: Müller Hoffmann & Partner
(86) International application number: PCT/JP2021/026180
(87) International publication number: WO 2022/034764

(57) **Abstract**

To provide a cloud observation system, a method, and a program capable of observing clouds at night by a camera.

Cloud observation system **1** provides an acquisition unit (11) that acquires a sky images **G1**, **G2** taken by a camera **10** that contain the sky, a threshold determination unit **12** that determines a threshold value based on a plurality of pixel values of a plurality of edges in the sky image **G1**, **G2**, and a cloud determination unit **13** that determines a pixel indicating a cloud from a plurality of pixels constituting the sky image **G1**, **G2** based on the threshold value and the plurality of pixel values in the sky image **G1**, **G2**.

## Description

### BACKGROUND OF THE INVENTION

### Technical Field

This disclosure relates to cloud observation systems, cloud observation methods, and programs.

### Description of the Related Art

It is known to use ground-based all-sky cameras as cloud observation methods. For example, Patent Document 1 states that clouds are observed based on sky images captured by an all-sky camera.

Patent Document 1: International Publication No. 2019/244510

Nighttime cloud observation methods using cameras are required. However, the algorithm for determining clouds and sky described in Patent Document 1 cannot be used at night.

### SUMMARY OF THE INVENTION

The present disclosure provides cloud observation systems, methods and programs that enable night clouds to be observed by cameras.

### Means and Effect(s) of solving the problem

The cloud observation system of the present disclosure is provided with an acquisition unit that acquires a sky image taken by a camera that contains the sky, a threshold determination unit that determines a threshold value based on the pixel values of a plurality of edges in the sky image, and a cloud determination unit that determines a pixel which contains a cloud from a plurality of pixels constituting the sky image based on the pixel values in the sky image and the threshold value.

### BRIEF DESCRIPTION OF THE DRAWINGS

**Fig. 1** is a block diagram illustrating the configuration of the cloud observation system of a first embodiment;
**Fig. 2** is an explanatory diagram for a sky image taken by a camera;
**Fig. 3** illustrates an actual sky image in grayscale;
**Fig. 4** illustrates edges extracted from the sky image shown in **Fig. 3** in white;
**Fig. 5** illustrates the lightness of the extracted edge with a number in the figure and showing the median value of the lightness;
**Fig. 6** illustrates an example of a sky image obtained from an all-sky camera;
**Fig. 7** is a flow chart illustrating the processing performed by the cloud observation system of the first embodiment;
**Fig. 8** is a block diagram illustrating the configuration of a cloud observation system of a second embodiment;
**Fig. 9** illustrates a plurality of areas set in a sky image;
**Fig. 10** is an explanatory diagram of the method of determining the threshold values for each of the plurality of areas;
**Fig. 11** is an explanatory diagram of the method of determining the threshold values for each of the plurality of areas;
**Fig. 12** is an explanatory diagram of the method of determining the threshold values for each of the plurality of areas; and
**Fig. 13** is an explanatory diagram of the method for determining the threshold value of each pixel of the sky image in a third embodiment.

### DETAILED DESCRIPTION OF THE EMBODIMENTS

Example apparatus are described herein. Other example embodiments or features may further be utilized, and other changes may be made, without departing from the spirit or scope of the subject matter presented herein. In the following detailed description, reference is made to the accompanying drawings, which form a part thereof.

The example embodiments described herein are not meant to be limiting. It will be readily understood that the aspects of the present disclosure, as generally described herein, and illustrated in the drawings, can be arranged, substituted, combined, separated, and designed in a wide variety of different configurations, all of which are explicitly contemplated herein.

The cloud observation system of a first embodiment of the present disclosure is described below with reference to the drawings.

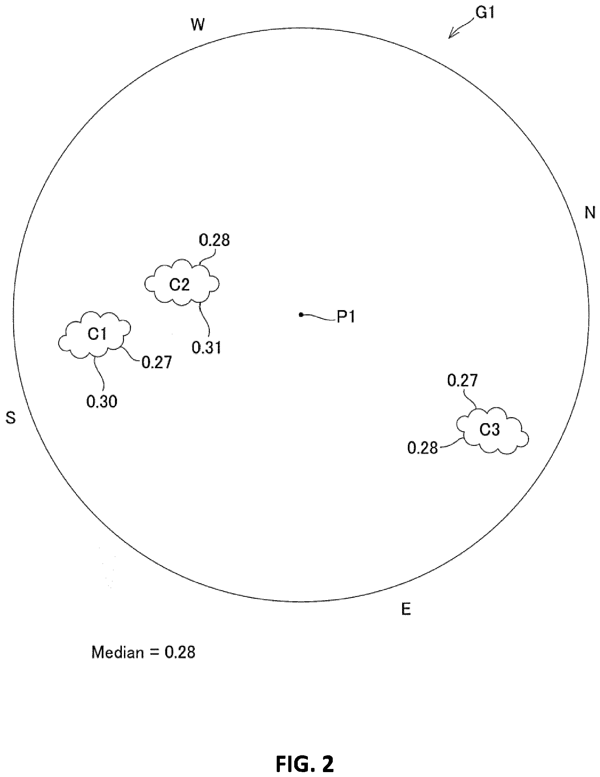

The cloud observation system **1** of the first embodiment processes sky images **G1**, **G2** taken by at least one camera **10**. The sky image contains the sky. The camera **10** can be any camera as long as it can photograph the sky. In this embodiment, an all-sky camera using a fisheye lens is set upwards to capture a wide area of the sky with a single camera, but it is not limited to this. If the camera **10** is placed vertically upward and horizontally, as shown in **Fig. 2**, a center **P1** of the sky image **G1** obtained from the camera **10** is directly above (elevation angle 90 degrees), and the elevation angle decreases as the center **P1** moves toward an edge of the image. If the orientation of the camera **10** is known, the orientation in the image is also known. That is, each pixel at an arbitrary position in the sky image has a known elevation angle and a known orientation. In the figure, the directions are shown as North (N), South (S), West (W) and East (E).

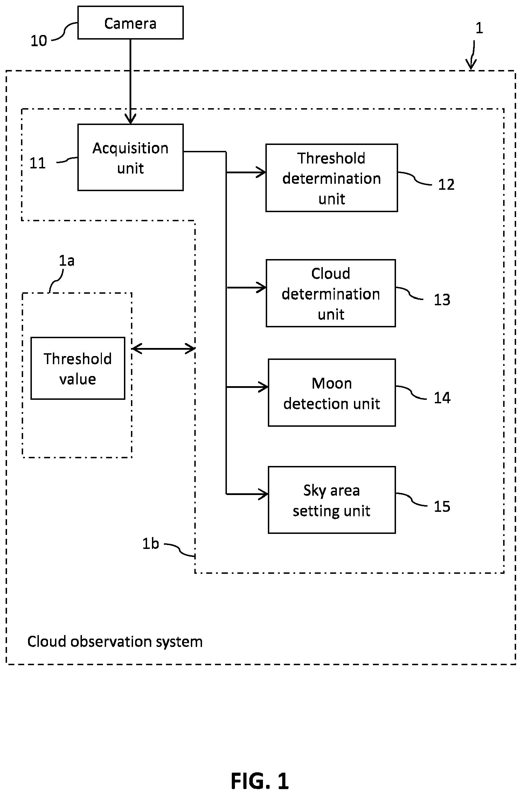

As shown in **Fig. 1**, the cloud observation system **1** has an acquisition unit **11**, a threshold determination unit **12**, and a cloud determination unit **13**. The cloud observation system **1** may have a moon detection unit **14** and a sky area setting unit **15**. These units **11 ~ 15** are realized in cooperation of software and hardware in a computer equipped with a processor **1b** such as a CPU, storage **1a** such as a memory, various interfaces, etc., by the processor **1b** executing a program stored in the memory **1a** beforehand.

The acquisition unit **11** shown in **Fig. 1** acquires at least one sky image. For cloud observation, the camera **10** is preferably taken periodically to obtain sky images **G1**, **G2**. A period of photographing by the camera **10** can be set arbitrarily, for example, every minute, every 5 minutes, every hour, etc. When shooting at night, the camera **10** needs to have a longer shutter speed compared to daytime. The shutter speed also affects the camera equipment, aperture, and other shooting conditions, such as 2.5 to 5 seconds. Since the way the sky image is captured also changes according to the shutter speed, it is preferable to take a plurality of pictures with the camera **10** at different shutter speeds to obtain a plurality of sky images each time the prescribed shooting timing comes. This is because a sky image with an appropriate shutter speed can be selected from the plurality of sky images.

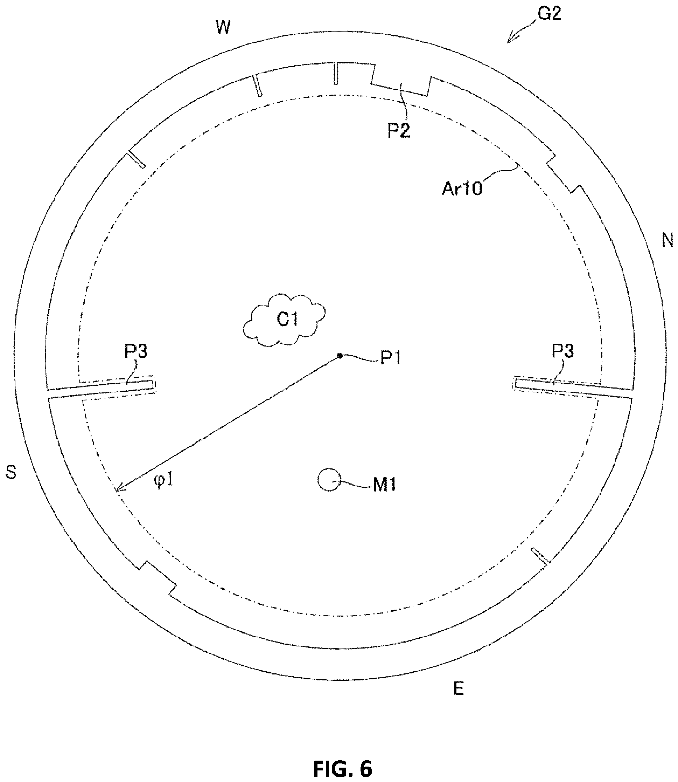

The sky area setting unit **15** shown in **Fig. 1** sets a sky area **Ar10** in the sky image as shown in **Fig. 6**. **Fig. 6** illustrates the sky image **G2** obtained from the all-sky camera **10**. As shown in **Fig. 6**, in the periphery of the sky image **G2** obtained from the all-sky camera **10**, there are cases where city buildings surrounding the all-sky camera **10**, city lights, obstacles, and other non-sky objects **P2** appear. Therefore, the sky area setting unit **15** removes a fringe part of the sky image **G1** from the sky area **ArlO** where the sky is visible. The fringe part means the area that lies outside the circle with a prescribed radius of **ϕ1** from the directly above **P1** of the sky image. In addition, when an obstacle **P3** is not in the periphery but is reflected, the obstacle **P3** is also removed from the sky area **Ar10**. In **Fig. 6**, the sky area **ArlO** is indicated by a dashed line. As the method by which the sky area setting unit **15** sets the sky area **Ar10**, it may be specified based on the coordinates individually specified by the user in advance, or it may be automatically recognized. An example of an automatic method of recognition is taking the plurality of sky images in succession during the day and using the change in pixel values in the area where clouds flow. Specifically, an area inside a circle of a prescribed radius, **ϕ1**, in the sky image **G2**, in which the change in pixel values is relatively large among the plurality of sky images is recognized as a sky area, **Ar10**. Conversely, a method for recognizing an area with relatively little change in pixel values as a non-sky area can be mentioned. The prescribed radius, **ϕ1**, can be changed appropriately depending on the performance of the camera. In the case of a fisheye lens, the larger the prescribed radius, **ϕ1**, the greater the distortion of the image, so that it can be changed appropriately according to the performance of the camera.

The threshold determination unit **12** shown in **Fig. 1** determines the threshold value based on the pixel values of the plurality of edges in the sky image. The threshold value is used in the cloud determination unit **13** for cloud determination. As shown in **Fig. 2**, when sky image **G1** shows clouds (**C1**, **C2**, **C3**), the boundary between the sky and clouds can be detected as an edge. An edge is a pixel whose pixel value changes rapidly compared to surrounding pixels in a sky image. The edge detection method can utilize various known algorithms. For example, the differential value of the pixel value is used.

During the day, clouds are white and the sky is blue due to sunlight refraction, so it is possible to determine clouds by comparing their blueness. But at night, in the absence of sunlight, blue comparisons can't detect clouds. At night, the clouds are brighter than the sky because the moonlight and city lights are reflected back by the clouds and reach the camera **10**. Therefore, in this embodiment, the lightness difference based on the pixel value is used to determine whether or not the pixel is a cloud. The lightness (L) used in this embodiment is calculated by (the red value (R) of the pixel + the green value (G) of the pixel + the blue value (B) of the pixel)/3, but the formula for calculating the lightness can be changed variably.

Since there is a high possibility that the threshold value of the pixel value (lightness) for distinguishing the cloud from the sky is different for each sky image, the threshold determination unit **12** determines a threshold value for each sky image. The threshold determination unit **12** determines the threshold value based on the pixel values (lightness) of the plurality of edges in the sky image. Specifically, as shown in **Fig. 2**, the pixel values (lightness) of the plurality of edges, which are often the boundaries between clouds and sky, are calculated respectively, and statistical processing is performed on the plurality of pixel values (lightness) to determine the threshold value. In this embodiment, a median of the plurality of pixel values (lightness) is used as the threshold value, but it is not limited to the median as statistical processing. For example, it may be mean or frequency. The median can be used to determine an appropriate threshold value without noise, such as a jump. In the example shown in **Fig. 2**, an edge of cloud **C1** has a portion with luminosity = 0.27 and another portion with luminosity = 0.30. An edge of cloud **C2** has a portion with luminosity = 0.28 and another portion with luminosity = 0.31. An edge of cloud **C3** has a portion with luminosity = 0.27 and another portion with luminosity = 0.28. In this case, the median value of each luminosity is 0.28 and the threshold value is determined to be 0.28. Since the figures do not illustrate the lightness of all edge pixels, some lightness values are illustrated for ease of understanding.

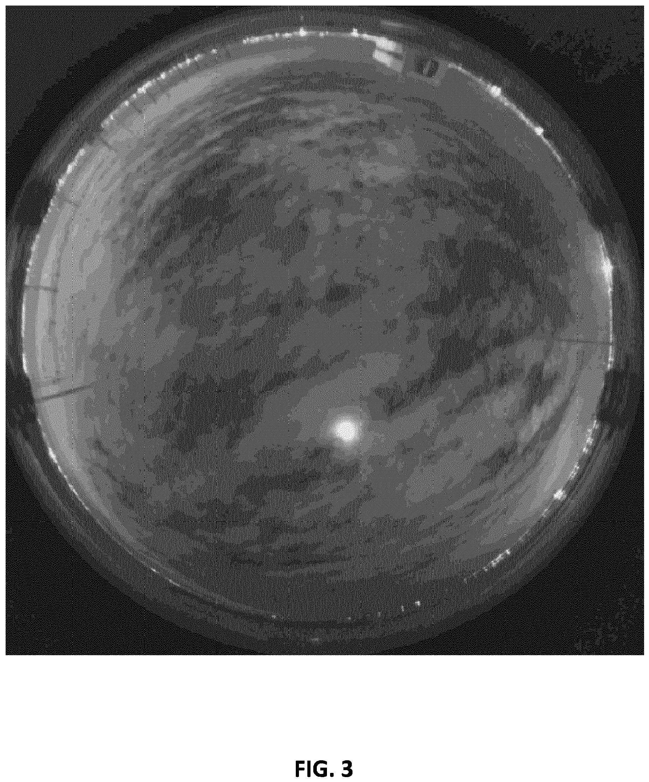

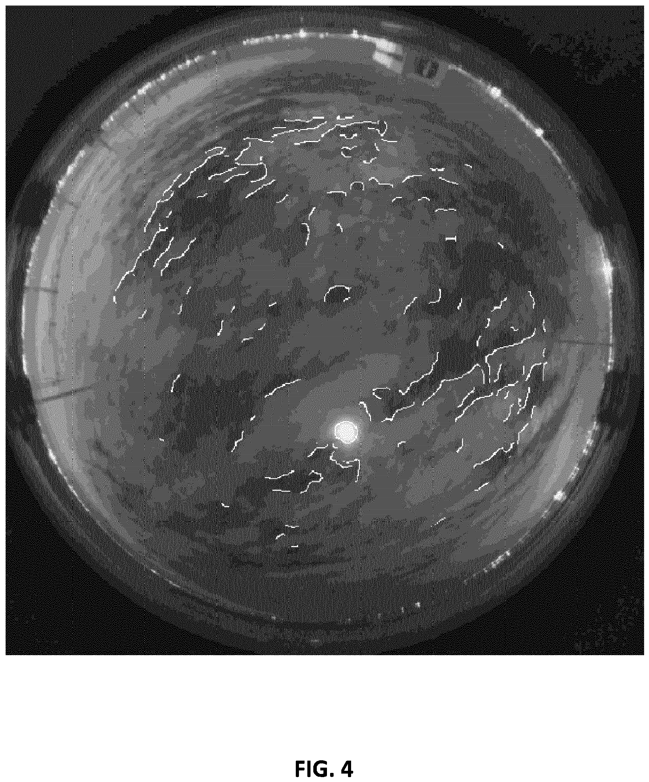

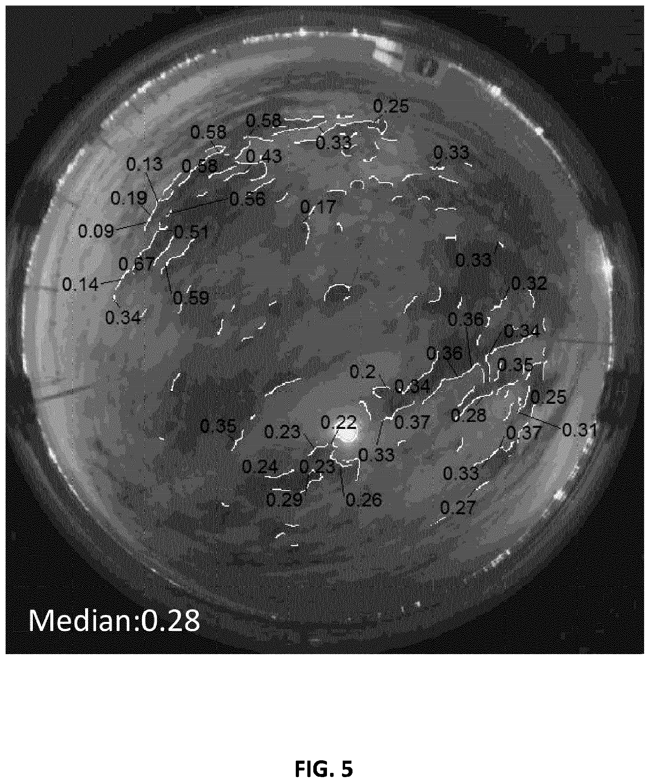

**Figs. 3** **~ 5** illustrate diagrams illustrating how the threshold value is determined based on an actual sky image. **Fig. 3** illustrates the sky image acquired by the acquisition unit **11** in gray scale. **Fig. 4** illustrates the edges extracted from the sky image shown in **Fig. 3** in white. **Fig. 5** illustrates the lightness of the extracted edge as a number in the figure and shows that the median value of the lightness is 0.28. As shown in **Fig. 5**, it can be seen that the threshold value pixel value (lightness) varies depending on the location in the sky image.

If the sky area **Ar10** in the sky image contains almost all clouds or almost all clear sky, no edges are detected or fewer edges are detected. In this case, the threshold value cannot be determined based on the pixel values of the plurality of edges. Therefore, in the first embodiment, the threshold determination unit **12** is configured as follows.

That is, the threshold determination unit **12** extracts edges in the first sky image **G1** taken at the first time point. If the number of extracted edges is less than a predetermined value, the threshold value determined based on the second sky image **G2** taken at the second time point is adopted as the threshold value for the first sky image **G1**. The second sky image **G2** is an image taken at the same time on a different day from the shooting date of the first sky image **G1**. This is because, on other days, it may be possible to detect edges exceeding a given value due to a mixture of clouds and sky, and at the same time, the threshold value conditions are considered to be the same or nearly the same. Here, for the same time zone, for example, the same time in the same camera is preferable, but there may be a time difference. The time difference between the first time point and the second time point is preferably zero or smaller. However, it is possible to produce an effect even if there is a time lag of, say, 10 minutes. More preferably, within 2 minutes, preferably within 1 minute, more preferably within 10 seconds. The difference in days between the first sky image **G1** and the second sky image **G2** is preferably within seven days, more preferably within three days, and even more preferably within one day. This is because if the difference is one day, it is considered that there is little difference in the threshold value.

When a plurality of second sky images exist, it is preferable to select a second sky image having the same moon age as the first sky image or the closest moon age from the plurality of second sky images. This is because the phases of the moon will be the same or similar, and the lightness of the clouds by the moon will be the same or similar.

Based on the pixel values and threshold values in the sky image, the cloud determination unit **13** shown in **Fig. 1** determines a pixel (hereinafter also referred to as cloud pixels) in which a cloud appears from a plurality of pixels constituting the sky image. In this embodiment, the threshold determination unit **12** determines a threshold value based on the lightness of the pixel, and the cloud determination unit **13** determines a cloud pixel based on the lightness and threshold value of the pixel in the sky image. In the examples of **Fig. 2** and **Fig. 5**, since the threshold value is 0.28, the cloud determination unit **13** determines that a pixel with a lightness of 0.28 or higher or a pixel with a lightness greater than 0.28 is a cloud pixel. In this embodiment, one threshold value is used for the target range of the sky area **Ar10** in the sky image.

The moon detection unit **14** shown in **Fig. 1** detects pixels indicating the moon **M1** in the sky image. The pixels indicating the moon **M1** are relatively the brightest compared to other pixels in the sky area. In the example of **Fig. 6**, the lightness of the pixels in the area where the moon **M1** is located becomes higher. The moon detection unit **14** calculates the lightness of all pixels in the sky area **Ar10** and determines the highest pixel to be the one indicating the moon **M1**. When the moon detection unit **14** is implemented, the target range from which the threshold determination unit **12** extracts edges and the target range from which the cloud determination unit **13** determines clouds are preferably the ranges from which the range of the moon is removed from the sky area **Ar10**. This is to avoid the influence of moon pixels on the threshold value.

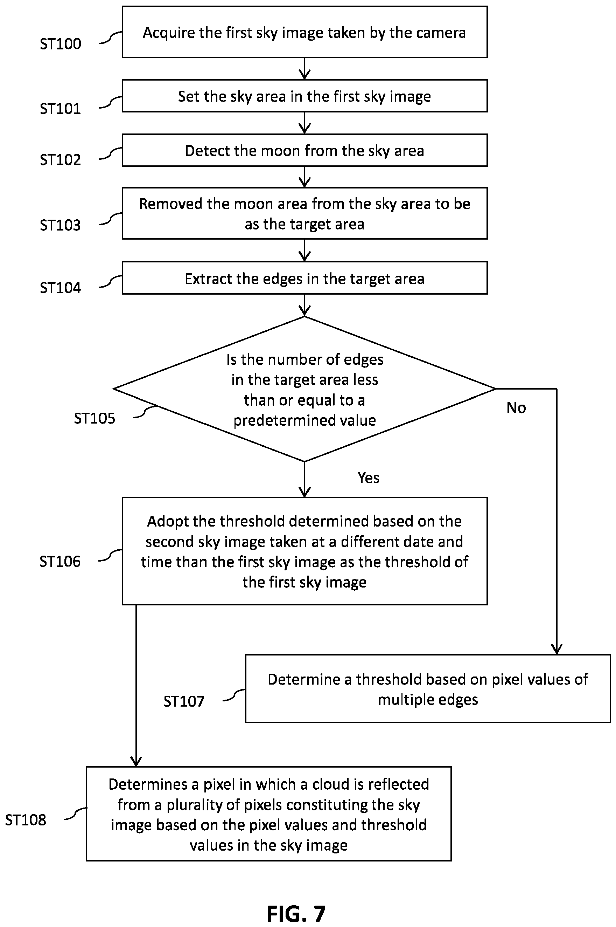

Cloud observation method of the first embodiment. The cloud observation method executed by the cloud observation system **1** is described with reference to **Fig. 7**.

First, in step **ST100**, the acquisition unit **11** acquires the first sky image taken by the camera **10**. In the next step **ST101**, the sky area setting unit **15** sets the sky area **Ar10** in the first sky image. In the next step **ST102**, the moon detection unit **14** detects the moon in the sky area **Ar10** of the sky image. In the next step **ST103**, the moon area is removed from the sky area **Ar10** to be the target area for threshold value determination and cloud determination. Then, in step **ST104**, the threshold determination unit **12** extracts the edge of the target area. If the number of edges of the target area is equal to or less than a predetermined value (**ST105**: YES), the threshold determination unit **12** adopts the threshold value determined based on the second sky image taken at the same time zone on a different day from the shooting date of the first sky image as the threshold value of the first sky image in step **ST106**, and moves to the next step **ST108**. On the other hand, when the number of edges of the target area is not less than a predetermined value (**ST105**: NO), in step **ST107**, the threshold determination unit **12** determines a threshold value based on the pixel values of the plurality of edges, and the process moves to the next step **ST108**. In step **ST108**, the cloud determination unit **13** determines a pixel in which a cloud is reflected from a plurality of pixels constituting the sky image based on the pixel values and threshold values in the sky image.

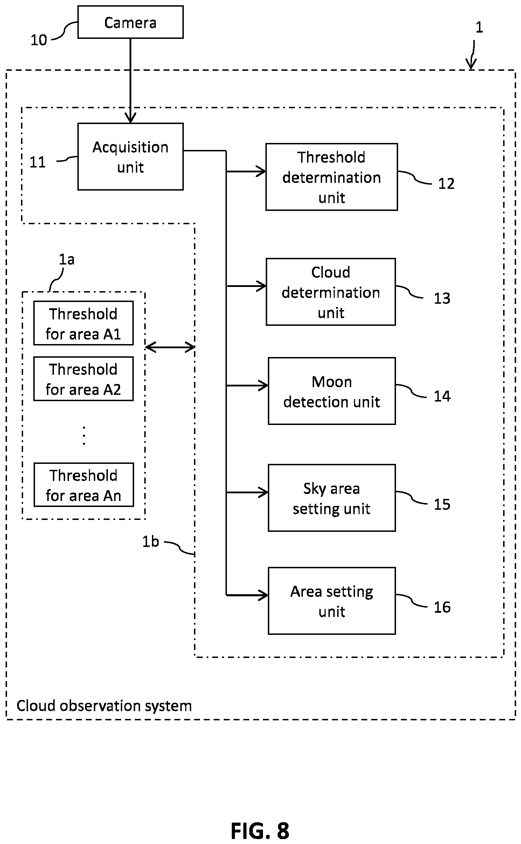

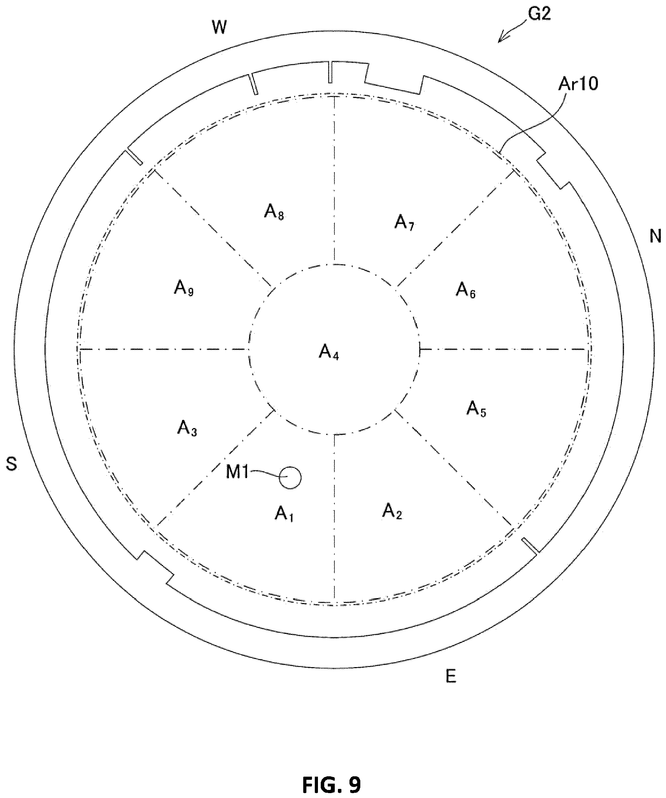

The cloud observation system **1** and method of the second embodiment are described. The same units as in the first embodiment are denoted by the same symbols, and the explanation is omitted. As shown in **Fig. 8**, the cloud observation system **1** of the second embodiment further has an area setting unit **16**. The area setting unit **16** sets a plurality of areas (**A1**, **A2** ... **An**) for the sky image **G2** (preferably the sky area **Ar10** of the sky image **G2**) as shown in **Fig. 9**. n is a natural number greater than or equal to 2. In the example of **Fig. 9**, n = 9, but the number of areas can be changed accordingly. The shape by which the sky area **Ar10** is divided into plurality of areas can also be changed arbitrarily. The threshold determination unit **12** determines threshold values for each of the plurality of areas **A1** to **A9**. The cloud determination unit **13** determines the pixels in which clouds in the area appear, using the threshold values of the areas **A1** to **A9**, respectively.

That is, in the first embodiment, only one threshold value is determined for the sky image, and clouds are determined by one threshold value. In contrast, in the second embodiment, the sky image is divided into plurality of areas **A1** to **A9**, a threshold value is determined for each area, and cloud pixels are determined for each area.

For example, as shown in **Fig. 9**, the area **A1** close to the moon (**M1**) in the sky image **G2** is easily brightened by the influence of the moon. Conversely, the portion of sky image **G2** that is far from the moon (**M1**) (For example, area **A7**, etc.) is unaffected by the moon and becomes relatively dark. In addition, the sky image **G2** includes directions close to city lights (For example, N, W, S) and directions without city lights such as the sea (E). Directions without city lights, such as the sea, are relatively dark compared to directions close to city lights. Therefore, in the sky image **G2**, the lightness of clouds varies from place to place. Therefore, since the sky image **G2** is divided into plurality of areas **A1** to **A9**, and the threshold value for each area is determined to determine the clouds for each area, the accuracy of cloud determination can be improved compared with the case where one threshold value is used for the whole sky image.

Specific methods for determining the threshold value are as follows:
(1) For each area **A1** to **A9**, the threshold value may be determined based on the pixel value (lightness) of the edge within the area,
(2) The first threshold value may be determined based on the pixel values (lightness) of all edges within the target range of the sky area **Ar10** (within plurality of areas **A1** to **A9**), and the threshold value of each area **A1** to **A9** may be determined by correcting the first threshold value according to the orientation corresponding to the area. For example, if east (E) is dark and northwest (N, W) is light, the value obtained by subtracting the value corresponding to east (E) from the first threshold value may be used as the threshold value for area **A2**, and the value obtained by adding the value corresponding to northwest (N, W) from the first threshold value may be used as the threshold value for areas **A6** to **A9**. In this case, the correction value corresponding to the bearing is preset, and
(3) The first threshold value may be determined based on the pixel values (lightness) of all edges within the target range of the sky area **Ar10**, and the threshold values of each area **A1** to **A9** may be determined by correcting the first threshold value with a correction value corresponding to the pixel values (lightness) of the peripheral area corresponding to the area. For example, the threshold value of area **A7** is determined by correcting the first threshold value with a correction value corresponding to the pixel value of the outer periphery of area **A6** (the pixel value of the northern periphery).

That is, when the above (2) and (3) are put together, the threshold values for each area are determined based on the pixel values of the edges in the plurality of areas **A1** to **A9** and the pixel values of the fringe part of the sky image **G2**.

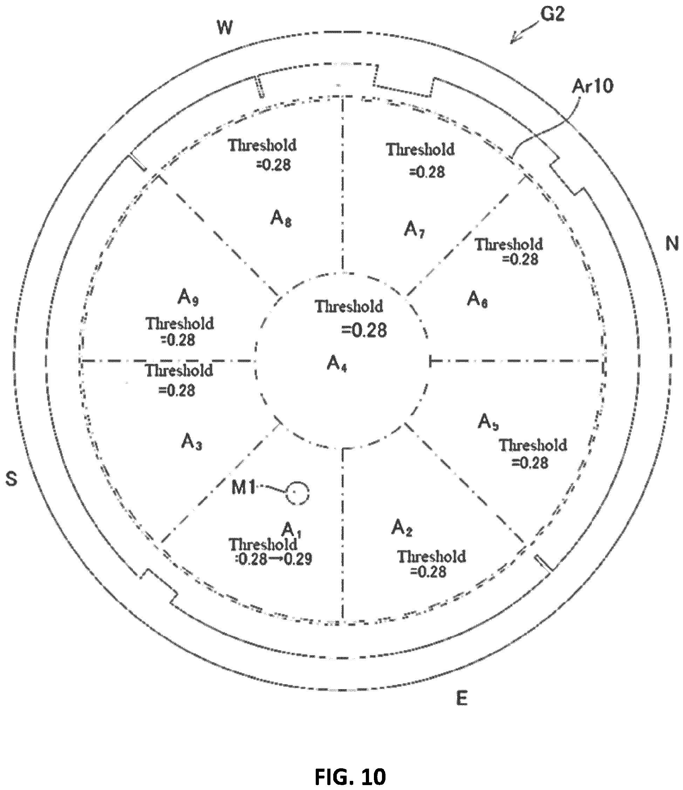

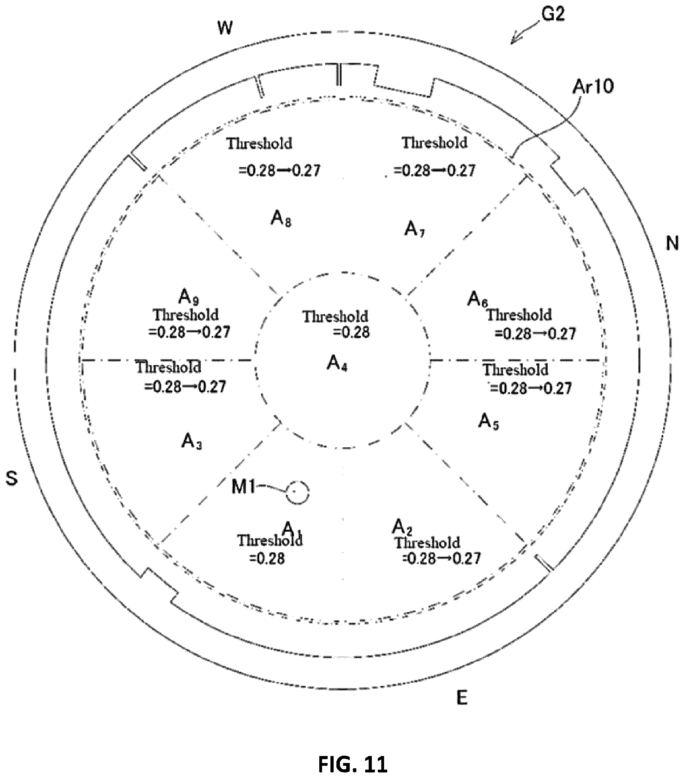

(4) As shown in **Fig. 10**, the plurality of areas have area **A1** (first area) containing the moon (**M1**) and areas **A2-A9** (second area) further away from the moon (**M1**) than area **A1** (first area). The threshold value 0.28 may be determined based on the pixel values of the edges in the plurality of areas (**A1** to **A9**) including the first and second areas, and the threshold value of the first area (**A1**) and the threshold value of the second area (**A2** to **A9**) may be different. As an example of a specific calculation method, a threshold value of 0.28 may be calculated from the pixel values of the edges of all areas, and the threshold value of the first area (**A1**) may be corrected in the bright direction to, for example, 0.29. As shown in **Fig. 11**, the threshold value 0.28 calculated based on the plurality of areas (**A1** to **A9**) may be set as the threshold value of the first area (**A1**), and the threshold value of the second area (**A2** to **A9**) may be corrected in the dark direction to, for example, 0.27.

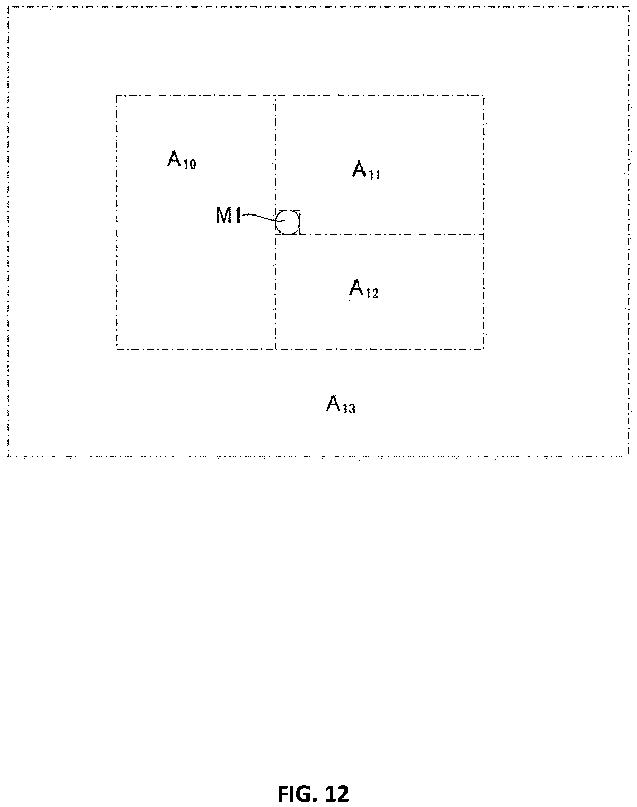

(5) As shown in **Fig. 12**, when the plurality of areas (**A10** to **A13**) are set except for the moon (**M1**), the area adjacent to the moon (**A10**, **A11**, **A12**) may be designated as the first area, and the area further away from the moon (**M1**) than the first area (**A10**, **A11**, **A12**) (**A13**) may be designated as the second area.

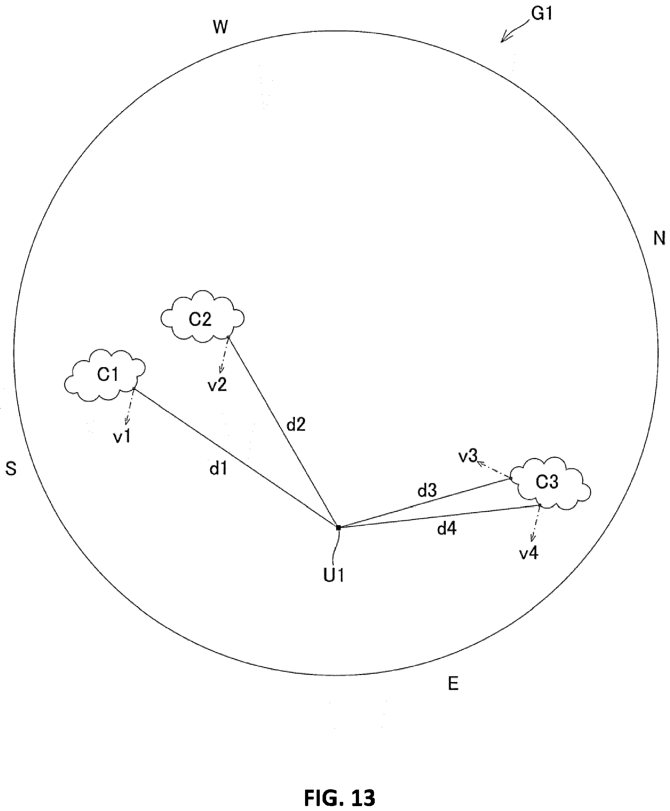

Like the first embodiment shown in **Fig. 1**, the third embodiment does not have the area setting unit **16** for setting the plurality of areas. As shown in **Fig. 13**, the threshold determination unit **12** determines the threshold value of each of the plural pixels constituting the sky image **G1** based on the distance from the pixel to the edge and the pixel value of the edge. The cloud determination unit **13** determines using the threshold values of each pixel constituting the sky image. For example, as shown in **Fig. 13**, when the threshold value of a certain pixel (**U1**) is calculated, the threshold value is calculated based on the distance from the pixel (**U1**) to the edge (**d1**, **d2**, **d3**, **d4**) and the pixel value of the edge (**v1**, **v2**, **v3**, **v4**). The effect of edge pixel values (lightness) on a given pixel (**U1**) is greater at closer distances and less at farther distances. Therefore, when determining the threshold value of a certain pixel (**U1**), it is necessary to weight the pixel values of all edges by distance. This makes it possible to increase the influence of the pixel value of an edge with a short distance from a certain pixel (**U1**) and to reduce the influence of the pixel value of an edge with a long distance from a certain pixel (**U1**). With this method, the accuracy of the threshold value can be greatly improved, although the computational cost increases.

In the above embodiment, the threshold value used for cloud determination is lightness, but it is not limited to this. For example, a pixel value may be a monochromatic pixel value or a combination of pixel values as appropriate.

As described above, the cloud observation system **1** of the first, second, and third embodiment consists of a sky image taken by the camera **10** that contains the sky (**G1**; **G2**), the threshold determination unit **12** that determines a threshold value based on the pixel values of a plurality of edges in the sky image, and the cloud determination unit **13** that determines a pixel indicating a cloud from a plurality of pixels constituting the sky image based on the pixel values and threshold values in the sky image.

The cloud observation methods of the first, second and third embodiment are to acquire a sky image taken by the camera **10** that contains the sky (**ST100**) and to determine a threshold value based on the pixel values of the plurality of edges in the sky image (**ST107**; ST106) and determining the pixels with clouds from the plurality of pixels composing the sky image based on the pixel values and threshold values in the sky image (**ST108**).

In this way, the edge in the sky image is often the boundary between the cloud and the sky, and the threshold value is determined based on the pixel values of the plurality of edges in the sky image. Therefore, the clouds can be identified and observed even at night when the color of the sky is not reflected by sunlight during the day.

Although not particularly limited, as in the first, second and third embodiment, it is preferable that the threshold determination unit 12 determines the threshold value based on the lightness of the pixels of the plurality of edges, and the cloud determination unit 13 determines the pixel in which the cloud appears based on the lightness and threshold value of the pixels in the sky image.

With this configuration, it is possible to improve the accuracy of cloud determination compared to, for example, determining clouds based on single-color pixel values.

Although not particularly limited, as in the second embodiment, the area setting unit 16 for setting a plurality of areas (**A1** to **A9**; **A10** to **A13**) for the sky image) is provided, the threshold determination unit **12** determines threshold value for each of the plurality of areas (**A1** to **A9**; **A10** to **A13**), and it is preferable that the cloud determination unit **13** uses the threshold value of each area to determine the pixels in which clouds appear.

For example, areas of the sky image that are closer to the moon are more likely to brighten under the influence of the moon. Conversely, the portion of the sky image that is far from the moon is relatively dark without the influence of the moon. Sky images also include directions close to city lights and directions without city lights, such as the sea, which are relatively darker than directions close to city lights. Therefore, by setting the plurality of areas in the sky image and using a threshold value for each area, it is possible to improve the accuracy of determining clouds compared to using one threshold value for the entire sky image.

Although not particularly limited, as in the second embodiment shown in **Fig. 9**, the sky image **G2** is an image taken by an all-sky camera, and it is preferable that the threshold determination unit **12** determines the threshold values of each of the areas (**A1** to **A9**) based on the pixel values of the edges in the plurality of areas and the pixel values of the peripheral of the sky image **G2**.

In this way, not only the pixel values of the edges in the plurality of areas, but also the pixel values of the periphery of the sky image, where city lights and the like may be visible, are used to determine the threshold value for each area, so that the threshold value can be determined in consideration of city lights and cloud determination accuracy can be improved.

Although not particularly limited, as in the second embodiment shown in **Fig. 10** **~ 12**, it is equipped with the moon detection unit **14** that detects pixels indicating the moon in the sky image **G2**, and has the plurality of areas **(A1** to **A9**; **A10** to **A13)** including the first area (**A1**; A10 to A12) containing or adjacent to the moon (**M1**), and the second area (**A2** to **A9**; **A13**), which is farther from the moon than the first area, and the threshold determination unit **12** determines the threshold value of each area based on the pixel values of the edges in the plurality of areas including the first and second areas, and sets the threshold value of the first area and the threshold value of the second area to different values.

The edge of the first area containing or adjacent to the moon is susceptible to moonlight and is likely to be bright. Therefore, while determining the threshold value based on the pixel values of the edges in the plurality of areas, the threshold values of the first and second areas are made different. As a result, the threshold value of the first area, which is susceptible to moonlight, and the threshold value of the second area, which is not susceptible to moonlight, can be set appropriately, and the cloud determination accuracy can be improved.

Although not particularly limited, as in the third embodiment, it is preferable that the threshold determination unit **12** extracts a plurality of edges in the sky image **G1** and determines the threshold values of each of the plurality of pixels constituting the sky image **G1** based on the distance from the pixel to the edge (**d1**, **d2**, **d3**, **d4**) and the pixel value of the edge (**v1**, **v2**, **v3**, **v4**), and that the cloud determination unit **13** uses the threshold values of each of the pixels constituting the sky image **G1**.

Edges closer to a pixel have a greater impact on cloud judgment than edges farther from a pixel. Therefore, since the threshold value is determined based on the distance from the pixel to the edge and the pixel value of the edge, it becomes possible to improve the cloud determination accuracy compared with the case where the threshold value is determined uniformly.

Although not particularly limited, as in the first, second and third embodiment, it is preferable that the moon detection unit **14** is provided to detect pixels indicating the moon in the sky image, and the threshold determination unit **12** extracts the edge by removing the range of the moon from the target range from which the edge is extracted.

With this configuration, the range of the moon that affects the determination of the threshold value is removed, and edges are extracted, which makes it possible to improve the accuracy of cloud determination.

Although not particularly limited, as in the first, second and third embodiment, the acquisition unit **11** acquires the first sky image. When the number of edges extracted based on the acquired first sky image is equal to or less than a predetermined value, a threshold value determined based on the second sky image photographed at the same time zone on a different day from the date and time of the first sky image is adopted as the threshold value of the first sky image.

If the number of edges is less than the prescribed value, the sky area in the first sky image is either all cloudy or all clear, and the threshold value cannot be determined. Therefore, since the threshold value of the second sky image in the same time zone of another day is used, which is considered to have almost the same threshold value condition, the clouds in the first sky image can be judged appropriately.

Although not particularly limited, it is preferable that the sky image is an image taken by an all-sky camera as in the first, second and third embodiment, and the threshold determination unit **12** extracts the edge by removing the fringe part of the sky image from the target area from which the edge is extracted.

With this configuration, the edge of the sky image obtained from an all-sky camera using a fisheye lens, which is likely to show city lights themselves, is removed from the target range of edge extraction, so that an appropriate threshold value can be determined, and cloud determination accuracy can be improved.

The program according to this embodiment is a program that causes a computer (one or more processors) to execute the above method. In addition, a temporary recording medium readable by a computer according to this embodiment stores the above program.

As described above, the embodiment of the present disclosure has been described based on the drawings, but the specific configuration should not be considered to be limited to these embodiments. The scope of this disclosure is indicated by the claims as well as by the description of the above embodiment, and further includes all modifications within the meaning and scope of the claims.

For example, the execution order of each process, such as operations, procedures, steps, and steps in the devices, systems, programs, and methods presented in the claims, description, and drawings, can be realized in any order unless the output of the previous process is used in the later process. The use of "first," "second," etc., for convenience in describing the flow in the claims, the description, and the drawings does not mean that it is mandatory to carry out the procedures in this order.

Each unit **11** - **15** shown in **Fig. 1** is realized by executing a predetermined program by the cloud observation system **1** or a processor, but each unit may be configured by a dedicated memory or a dedicated circuit.

In the cloud observation system **1** of the above embodiment, the units **11** - **15** are implemented in the processor **1b** of one computer, but the units **11** - **15** may be distributed and implemented in a plurality of computers or clouds. That is, the above method may be performed by one or more processors.

It is possible to adopt the structure adopted in each of the above embodiment to any other embodiment. In **Fig. 1**, each unit **11 ~ 15** is implemented for illustrative purposes, but these units can be omitted arbitrarily.

The specific configuration of each unit is not limited to the above described embodiments, and various variations are possible without departing from the purpose of this disclosure.

### [List of Reference Numerals]

1 Cloud observation system
1a Memory
1b Processor
10 Camera
11 Acquisition unit
12 Threshold determination unit
13 Cloud determination unit
14 Moon detection unit
15 Sky area setting unit
16 Area Setting unit

## Claims

1. A cloud observation system, comprising:
an acquisition unit configured to acquire a sky image taken by a camera that contains the sky, and
a threshold determination unit configured to determine a threshold value based on a plurality of pixel values of a plurality of edges in the sky image; and
a cloud determination unit configured to determine a pixel indicating a cloud from a plurality of pixels constituting the sky image based on the threshold value and the plurality of pixel values in the sky image.

2. The cloud observation system according to claim 1, wherein:
the threshold determination unit determines the threshold value based on a lightness of the plurality of pixels of the plurality of edges, and
the cloud determination unit determines the pixel indicating the cloud based on the lightness of the pixel in the sky image and the threshold value.

3. The cloud observation system according to claim 1 or 2, further comprising:
an area setting unit configured to set a plurality of areas in the sky image, wherein:
the threshold determination unit determines a plurality of threshold values of each of the plurality of areas, and
the cloud determination unit determines the pixel indicating the cloud using the plurality of threshold values for each of the plurality of areas.

4. The cloud observation system according to claim 3, wherein:
the sky image is an image taken by an all-sky camera, and
the threshold determination unit determines the plurality of threshold values of each of the plurality of areas based on the plurality of pixel values of the plurality of edges in the plurality of areas and the plurality of pixel values of a fringe part of the sky image.

5. The cloud observation system according to claims 3 or 4, further comprising:
a moon detection unit configured to detect pixels indicating a moon in the sky image, wherein:
the plurality of areas includes a first area indicating or adjacent to the moon and a second area further away from the moon than the first area, and
the threshold determination unit determines the threshold values of each of the areas based on the pixel values of the edges in a plurality of areas including the first area and the second area and sets the threshold values of the first area and the second area to different values.

6. The cloud observation system according to claim 1 or 2, wherein:
the threshold determination unit extracts a plurality of edges in the sky image and determines the threshold values for each of the plurality of pixels constituting the sky image based on a distance from the pixel to the edge and the pixel value of the edge, and
the cloud determination unit determines using threshold values of each pixel constituting the sky image.

7. The cloud observation system according to any one of claims 1 to 6, wherein:
the moon detection unit configured to detect pixels indicating the moon in the sky image, and
the threshold determination unit extracts the edge by removing a range of the moon from a target range for extracting edges.

8. The cloud observation system according to any one of claims 1 to 7, wherein:
the acquisition unit acquires a first sky image, and
the threshold determination unit adopts the threshold value determined based on a second sky image taken at the same time zone on a different day from the date and time of taking the first sky image as the threshold value of the first sky image when the number of edges extracted based on the acquired first sky image is equal to or less than a predetermined value.

9. The cloud observation system according to any one of claims 1 to 8, wherein:
the sky image is an image taken by an all-sky camera, and
the threshold determination unit extracts the edge by removing the fringe part of the sky image from a target range for extracting edges.

10. A cloud observation method, comprising:
acquiring a sky image taken by a camera that contains the sky, and
determining a threshold value based on a plurality of pixel values of a plurality of edges in the sky image; and
determining a pixel indicating a cloud from a plurality of pixels constituting the sky image based on the threshold value and the plurality of pixel values in the sky image.

11. A non-transitory computer-readable medium having stored thereon computer-executable instructions which, when executed by a computer, cause the computer to execute the cloud observation method according to claim 10.
